# EUROPÄISCHE PATENTSCHRIFT

(11) **EP 1 938 356 B1**
(45) Veröffentlichungstag und Bekanntmachung des Hinweises auf die Patenterteilung: **26.05.2010**
(21) Anmeldenummer: 06805332.1
(22) Anmeldetag: 21.09.2006
(51) Int. Cl.: H01H 89/06

(54) **ÜBERWACHUNG EINER VORGESCHALTETEN SCHUTZEINRICHTUNG AN EINEM SCHALTGERÄT**
MONITORING OF AN UPSTREAM PROTECTIVE DEVICE ON A SWITCHING DEVICE
SURVEILLANCE D'UN DISPOSITIF DE PROTECTION MONTÉ EN AMONT D'UN APPAREILLAGE DE COMMUTATION

(43) Veröffentlichungstag der Anmeldung: 02.07.2008
(73) Patentinhaber: SIEMENS AKTIENGESELLSCHAFT, 80333 München (DE)
(72) Erfinder: HARTINGER, Peter, 92439 Bodenwöhr (DE); KEIL, Rainer, 90451 Nürnberg (DE); SCHATZ, Wolfgang, 92224 Amberg (DE)
(86) Internationale Anmeldenummer: PCT/DE2006/001681
(87) Internationale Veröffentlichungsnummer: WO 2008/034394

(56) Entgegenhaltungen:
- DE-A1- 10 041 633
- DE-B1- 2 920 188

## Beschreibung

Die Erfindung betrifft ein Verfahren zur Überwachung einer einem Schaltgerät vorgeschalteten Schutzvorrichtung, die mit dem Schaltgerät über zumindest eine Hauptstrombahn verbunden ist.

Die Erfindung betrifft ferner ein System aus einem Schaltgerät und einer diesem vorgeschalteten Schutzvorrichtung, die über zumindest eine Hauptstrombahn verbindbar sind, sowie einer Auswerteeinheit.

Ein derartiges Verfahren bzw. System, wie z.B. in DE 100 41 633 A offenbart, kommt insbesondere bei Verbraucherabzweigen wie beispielsweise Motorstartern zum Einsatz. Schaltgeräte für Verbraucherabzweige werden z.B. in Schaltanlägen eingesetzt, die im Regelfall in mehreren Ebenen gegen Kurzschlüsse und Überlast abgesichert werden (Einspeisung, Verteilung, Verbraucher). Dabei ist der Zustand des z.B. Motorstarters gekennzeichnet durch die Ansteuerung des Schaltgerätes, beispielsweise eines Schützes, durch die Rückmeldung des angesteuerten Schaltgerätezustands sowie durch die Meldung des Zustands der zumindest einen vorgeschalteten Schutzvorrichtung, die z.B. ein Leistungsschalter sein kann.

Das Problem liegt darin, dass, bedingt durch die typische Aufbauweise im Schaltschrank, Aufwand für die Verdrahtung dieser Signale entsteht, da je Abzweig mehrere (typischerweise sechs) Verdrahtungsleitungen nötig sind, entweder direkt zu einer Steuerung, wie z.B. einer speicherprogrammierbaren Steuerung (SPS), oder zu einer Kommunikationsanschaltung, die mit der SPS über eine Kommunikationsanbindung wie beispielsweise ein Feldbussystem oder eine Punkt-zu-Punkt-Anbindung verbunden ist. Auch beim Einsatz von Kommunikationssystemen zur Verdrahtungseinsparung muss weiterhin zum Schutzgerät verdrahtet werden. Hierbei erfolgt die Meldung des Zustands der Schutzvorrichtung durch einen Hilfsschalter am Schutzgerät. Durch einen Hilfsschalter eines Leistungsschalters wird allerdings das einspeiseseitige Fehlen der Hauptspannung (Energie) nicht erkannt. Durch den hohen Verdrahtungsaufwand sind diese herkömmlichen Lösungen nicht nur zeit- und kostenaufwendig, sondern bergen auch eine mögliche Fehlerquelle bei der Verdrahtung in sich.

Der Erfindung liegt die Aufgabe zugrunde, ein Verfahren bzw. ein System anzugeben, bei dem der Verdrahtungsaufwand für die Überwachung einer einem Schaltgerät vorgeschalteten Schutzvorrichtung minimiert wird.

Diese Aufgabe wird durch ein Verfahren zur Überwachung einer einem Schaltgerät vorgeschalteten Schutzvorrichtung, die mit dem Schaltgerät über zumindest eine Hauptstrombahn verbunden ist, wobei der Zustand der Schutzvorrichtung durch einen Abgriff der zumindest einen Hauptstrombahn am oder im Schaltgerät von einer Auswerteeinheit ermittelt wird, gelöst.

Diese Aufgabe wird weiter durch ein System aus einem Schaltgerät und einer diesem vorgeschalteten Schutzvorrichtung, die über zumindest eine Hauptstrombahn verbindbar sind, sowie einer Auswerteeinheit, wobei die Auswerteeinheit zur Ermittlung des Zustands der Schutzvorrichtung durch einen Abgriff der zumindest einen Hauptstrombahn am oder im Schaltgerät vorgesehen ist, gelöst.

Mit dem Abgriff des Hauptstromkreises am Schaltgerät wird der Zustand der vorgeschalteten Schutzvorrichtung abgefragt. Durch diese direkte Auswertung des Schaltzustands des Schutzorgans am Schaltgerät entfällt die bisher erforderliche Verdrahtung zu einem zusätzlichen Hilfsschalter am Schutzgerät, wobei mit dem Verdrahtungsaufwand auch eine mögliche Fehlerquelle minimiert wird. Dazu ist die vorgeschlagene Lösung auch unabhängig vom räumlichen Aufbau (abzweig- oder zeilenorientiert, Entfernung der Geräte untereinander) in einem Schaltschrank.

In einer vorteilhaften Form der Ausgestaltung wird der Zustand der Schutzvorrichtung durch eine Spannungserfassung an der zumindest einen Hauptstrombahn ermittelt. Hierdurch wird auf einfachste Weise neben dem (Schalt-) Zustand des Schutzgerätes die Zusatzinformation erlangt, dass eine Spannung am Schaltgerät vorliegt.

In einer weiteren vorteilhaften Ausführungsform wird der Abgriff der zumindest einen Hauptstrombahn im Schaltgerät integriert und über je eine elektrisch leitende Verbindung mit einer jeweiligen Kontaktschnittstelle am Schaltgerät verbunden. An diesen Kontaktschnittstellen (Kontaktierpunkte, - flächen oder -stellen) kann dann die Auswerteeinheit, z.B. als zusätzliches Modul, angeschlossen werden, ohne dass ein weiteres Zusatzteil erforderlich ist.

In einer weiteren vorteilhaften Ausführungsform erfolgt der Abgriff der zumindest einen Hauptstrombahn durch einen Adapter an einem jeweiligen Festschaltstück des Schaltgerätes, und die Auswerteeinheit wird an den Adapter angeschlossen oder in den Adapter integriert. Auf diese Weise kann der Abgriff mit keinen oder nur geringen Modifikationen am Schaltgerät erfolgen.

In einer weiteren vorteilhaften Ausführungsform wird die Auswerteeinheit im Schaltgerät integriert, wodurch eine kompakte und Platz sparende Bauweise erzielt wird.

In einer weiteren vorteilhaften Ausführungsform wird die Auswerteeinheit mit dem Schaltgerät mechanisch verbunden. Dabei kann die Verbindung z.B. durch eine einfache Steck- oder Schnappverbindung realisiert sein.

In einer weiteren vorteilhaften Ausführungsform wird ein Meldesignal über den Zustand der Schutzvorrichtung von der Auswerteeinheit an ein Kommunikationsmodul weitergeleitet, das mit dem Schaltgerät und einer Steuerung für das Schaltgerät über je zumindest eine Kommunikationsanbindung verbunden ist. Das Kommunikationsmodul hat dabei auch die Aufgabe, ein Meldesignal über den Schaltzustand des Schaltgerätes als Rückmeldung eines Schaltsignals zur Steuerung und ein Ansteuerungssignal für das betriebsmäßige Schalten des Schaltgerätes von der Steuerung zum Schaltgerät zu übertragen. Die Kommunikationsanbindung zwischen Kommunikationsmodul und Steuerung kann dabei z.B. als ein Feldbussystem oder eine Punkt-zu-Punkt-Anbindung realisiert sein. Auf diese Weise wird weiterer Verdrahtungsaufwand, insbesondere von der Auswerteeinheit zur Steuerung, eingespart. Darüber hinaus ermöglicht der Abgriff der zumindest einen Hauptstrombahn weitere Funktionen im Kommunikationsmodul, wie beispielsweise eine Überwachung auf Phasenausfall oder eine Überwachung der Phasenfolge.

In einer weiteren vorteilhaften Ausführungsform ist dabei die Auswerteeinheit in das Kommunikationsmodul und/oder das Kommunikationsmodul in das Schaltgerät integriert, woraus wiederum eine kompakte und Platz sparende Bauweise resultiert. Vorteilhafterweise wird dabei das Kommunikationsmodul mit dem Schaltgerät mechanisch verbunden.

Im Folgenden wird die Erfindung anhand des in der Figur dargestellten Ausführungsbeispiels näher beschrieben und erläutert. Es zeigt:

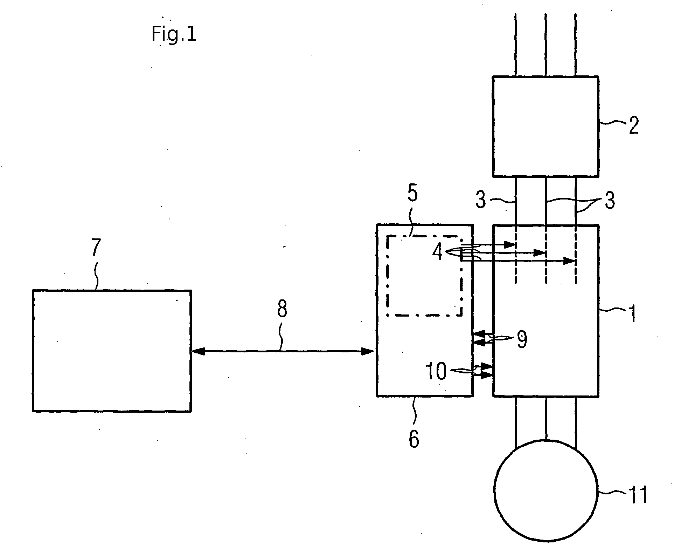

- FIG 1: eine schematische Darstellung eines Motorstarters mit einer Überwachung des vorgelagerten Schutzorgans am Schaltgerät.

Fig 1 zeigt ein Schaltgerät 1 und ein diesem vorgelagertes Schutzorgan 2, die über drei Hauptstrombahnen 3 verbunden sind. Dabei ist das Schaltgerät 1 als Schütz und die vorgeschaltete Schutzvorrichtung 2 als Leistungsschalter ausgeführt. Angeschlossen an den Schütz 1 ist über die drei Hauptstrombahnen 3 ein Motor 11 und über zwei Kommunikationsanbindungen 9, 10 ein Kommunikationsmodul 6. Dabei wird über die Kommunikationsanbindung 10 ein Ansteuerungssignal für das betriebsmäßige Schalten des Schaltgerätes 1 durch eine Steuerung 7, insbesondere eine speicherprogrammierbare Steuerung (SPS), an das Schaltgerät 1 gegeben. Im dargestellten Fall erfolgt hier also z.B. eine Spulenansteuerung des Schützes 1. Über die Kommunikationsanbindung 9 wird nun ein Meldesignal über den Schaltzustand des Schaltgerätes 1 als Rückmeldung des Schaltsignals an das Kommunikationsmodul 6 zurückgegeben. Dies kann z.B. über einen Hilfsschalter des Schützes 1 erfolgen. Ansteuerungssignal und Meldesignal werden dabei zwischen dem Kommunikationsmodul 6 und der SPS 7 über eine Kommunikationsanbindung 8 ausgetauscht, die z.B. ein Feldbussystem oder eine Punkt-zu-Punkt-Anbindung sein kann. Der Zustand des Motorstarters ist nun gekennzeichnet durch die Ansteuerung des Schützes 1, die Rückmeldung des Schaltgerätezustands und eine Meldung des Zustandes des vorgeschalteten Leistungsschalters 2. Erfindungsgemäß erfolgt die Abfrage des Zustandes der vorgeschalteten Schutzvorrichtung 2 durch eine Auswerteeinheit 5 über einen Abgriff 4 der Hauptstrombahnen 3 am Schaltgerät 1. Die Auswerteeinheit 5 wertet dabei die am Schaltgerät 1 anliegende Spannung aus und generiert bei Anliegen einer Spannung ein "Bereit"-Signal, das über das Kommunikationsmodul 6 an die SPS 7 weitergegeben wird. Im dargestellten Fall ist die Auswerteeinheit 5 in das Kommunikationsmodul 6 integriert, wodurch sich der nötige Verdrahtungsaufwand verringert. Eine zusätzliche Reduktion des Verdrahtungsaufwandes ergibt sich bei einer mechanisch mit dem Schaltgerät 1 verbindbaren Ausführung des Kommunikationsmoduls 6, so dass beispielsweise durch direktes Aufstecken des Kommunikationsmoduls 6 auf den Schütz 1 mittels im Schützgehäuse dafür vorgesehener Kontaktschnittstellen die Verdrahtung zwischen Schütz 1 und Kommunikationsmodul 6 hinfällig wird.

Zusammenfassend betrifft die Erfindung ein Verfahren und ein System zur Überwachung einer einem Schaltgerät vorgeschalteten Schutzvorrichtung, die mit dem Schaltgerät über zumindest eine Hauptstrombahn verbunden ist. Der Erfindung liegt die Aufgabe zugrunde, ein Verfahren bzw. ein System anzugeben, bei dem der Verdrahtungsaufwand für die Überwachung der Schutzvorrichtung minimiert wird. Diese Aufgabe wird dadurch gelöst, dass der Zustand der Schutzvorrichtung durch einen Abgriff der zumindest einen Hauptstrombahn am oder im Schaltgerät von einer Auswerteeinheit ermittelt wird. Durch diese direkte Auswertung des Schaltzustands des Schutzorgans am Schaltgerät entfällt die bisher erforderliche Verdrahtung zu einem zusätzlichen Hilfsschalter am Schutzgerät, wobei mit dem Verdrahtungsaufwand auch eine mögliche Fehlerquelle minimiert wird. Dazu ist die vorgeschlagene Lösung auch unabhängig vom räumlichen Aufbau (abzweig- oder zeilenorientiert, Entfernung der Geräte untereinander) in einem Schaltschrank.

## Patentansprüche

1. Verfahren zur Überwachung einer einem Schaltgerät (1) vorgeschalteten Schutzvorrichtung (2), die mit dem Schaltgerät (1) über zumindest eine Hauptstrombahn (3) verbunden ist, **dadurch gekennzeichnet, dass** der Zustand der Schutzvorrichtung (2) durch einen Abgriff (4) der zumindest einen Hauptstrombahn (3) an einer jeweiligen Kontaktschnittstelle am Schaltgerät (1) oder im Schaltgerät (1) von einer Auswerteeinheit (5) ermittelt wird.

2. Verfahren nach Anspruch 1,
wobei der Zustand der Schutzvorrichtung (2) durch eine Spannungserfassung an der zumindest einen Hauptstrombahn (3) ermittelt wird.

3. Verfahren nach Anspruch 1 oder 2,
wobei der Abgriff (4) der zumindest einen Hauptstrombahn (3) im Schaltgerät (1) integriert und über je eine elektrisch leitende Verbindung mit einer jeweiligen Kontaktschnittstelle am Schaltgerät (1) verbunden wird.

4. Verfahren nach Anspruch 1 oder 2,
wobei der Abgriff (4) der zumindest einen Hauptstrombahn (3) durch einen Adapter an einem jeweiligen Festschaltstück des Schaltgerätes (1) erfolgt und wobei die Auswerteeinheit (5) an den Adapter angeschlossen oder in den Adapter integriert wird.

5. Verfahren nach Anspruch 1 oder 2,
wobei die Auswerteeinheit (5) im Schaltgerät (1) integriert wird.

6. Verfahren nach einem der vorhergehenden Ansprüche,
wobei die Auswerteeinheit (5) mit dem Schaltgerät (1) mechanisch verbunden wird.

7. Verfahren nach einem der vorhergehenden Ansprüche,
wobei ein Meldesignal über den Zustand der Schutzvorrichtung (2) von der Auswerteeinheit (5) an ein Kommunikationsmodul (6) weitergeleitet wird, das mit dem Schaltgerät (1) und einer Steuerung (7) für das Schaltgerät (1) über je zumindest eine Kommunikationsanbindung (8-10) verbunden ist.

8. Verfahren nach Anspruch 7,
wobei die Auswerteeinheit (5) in das Kommunikationsmodul (6) integriert ist.

9. Verfahren nach Anspruch 7 oder 8,
wobei das Kommunikationsmodul (6) in das Schaltgerät (1) integriert ist.

10. Verfahren nach einem der Ansprüche 7 bis 9,
wobei das Kommunikationsmodul (6) mit dem Schaltgerät (1) mechanisch verbunden wird.

11. System aus einem Schaltgerät (1) und einer diesem vorgeschalteten Schutzvorrichtung (2), die über zumindest eine Hauptstrombahn (3) verbindbar sind, sowie einer Auswerteeinheit (5), **dadurch gekennzeichnet, dass** die Auswerteeinheit (5) zur Ermittlung des Zustands der Schutzvorrichtung (2) durch einen Abgriff (4) der zumindest einen Hauptstrombahn (3) an einer jeweiligen Kontaktschnittstelle am Schaltgerät (1) oder im Schaltgerät (1) vorgesehen ist.

12. System nach Anspruch 11,
wobei die Auswerteeinheit (5) Mittel zur Ermittlung des Zustands des Schutzorgans (2) durch eine Spannungserfassung an der zumindest einen Hauptstrombahn (3) aufweist.

13. System nach Anspruch 11 oder 12,
wobei der Abgriff (4) der zumindest einen Hauptstrombahn (3) im Schaltgerät (1) integrierbar und über je eine elektrisch leitende Verbindung mit einer jeweiligen Kontaktschnittstelle am Schaltgerät (1) verbindbar ist.

14. System nach Anspruch 11 oder 12,
wobei ein Adapter an einem jeweiligen Festschaltstück des Schaltgerätes (1) für den Abgriff (4) der zumindest einen Hauptstrombahn (3) vorgesehen ist und wobei die Auswerteeinheit (5) an den Adapter anschließbar oder in den Adapter integrierbar ist.

15. System nach Anspruch 11 oder 12,
wobei die Auswerteeinheit (5) im Schaltgerät (1) integriert ist.

16. System nach einem der Ansprüche 11 bis 15,
wobei die Auswerteeinheit (5) und/oder das Schaltgerät (1) Mittel zur Herstellung einer lösbaren mechanischen Verbindung miteinander aufweisen.

17. System nach einem der Ansprüche 11 bis 16,
wobei ein Kommunikationsmodul (6) vorgesehen ist, das mit dem Schaltgerät (1) und einer Steuerung (7) für das Schaltgerät (1) über je zumindest eine Kommunikationsanbindung (8-10) verbindbar ist, und wobei die Auswerteeinheit (5) zur Weiterleitung eines Meldesignals über den Zustand der Schutzvorrichtung (2) ausgebildet ist.

18. System nach Anspruch 17,
wobei die Auswerteeinheit (5) in das Kommunikationsmodul (6) integriert ist.

19. System nach Anspruch 17 oder 18,
wobei das Kommunikationsmodul (6) in das Schaltgerät (1) integriert ist.

20. System nach einem der Ansprüche 17 bis 19,
wobei das Kommunikationsmodul (6) und/oder das Schaltgerät (1) Mittel zur Herstellung einer lösbaren mechanischen Verbindung miteinander aufweisen.

## Claims

1. Method for monitoring a protective device (2) that is arranged upstream of a switching device (2), said protective device being connected to the switching device (1) via at least one main current path (3), **characterised in that** the state of the protective device (2) is determined by tapping into the at least one main current path (3) on a particular contact interface on the switching device (1) or in the switching device (1) using an evaluation unit (5).

2. Method according to claim 1,
with the state of the protective device (2) being determined by recording the voltage on the at least one main current path (3).

3. Method according to claim 1 or 2,
with the tapping (4) into the at least one main current path (3) in the switching device (1) being integrated into, and connected in each case to a particular contact interface on the switching device (1) via an electrically conductive connection.

4. Method according to claim 1 or 2,
with the tapping (4) into the at least one main current path (3) being performed by an adapter on a particular fixed contact belonging to the switching device (1) and with the evaluation unit (5) being connected to the adapter or integrated into the adapter.

5. Method according to claim 1 or 2,
with the evaluation unit (5) being integrated into the switching device (1).

6. Method according to one of the preceding claims,
with the evaluation unit (5) being mechanically connected to the switching device (1).

7. Method according to one of the preceding claims,
with a status signal regarding the state of the protective device (2) being forwarded from the evaluation unit (5) to a communications module (6) that is connected to the switching device (1) and to a controller (7) for the switching device (1) via at least one communications interface (8 - 10) in each instance.

8. Method according to claim 7,
with the evaluation unit (5) being integrated into the communications module (6).

9. Method according to claim 7 or 8,
with the communications module (6) being integrated into the switching device (1).

10. Method according to one of claims 7 to 9,
with the communications module (6) being mechanically connected to the switching device (1).

11. System consisting of a switching device (1) and of a protective device (2) upstream thereof, which are connectable via at least one main current path (3), and of an evaluation unit (5), **characterised in that** the evaluation unit (5) for determining the state of the protective device (2) is provided by tapping (4) into the at least one main current path (3) on a particular contact interface on the switching device (1) or in the switching device (1).

12. System according to claim 11,
with the evaluation unit (5) having means for determining the state of the protective organ (2) by recording the voltage on the at least one main current path (3).

13. System according to claim 11 or 12,
with the tapping (4) into the at least one main current path (3) being integratable into the switching device (1) and being connectable to a particular contact interface on the switching device (1) via one electrically conductive connection in each case.

14. System according to claim 11 or 12,
with an adapter on a particular fixed contact belonging to the switching device (1) being provided for the tapping (4) into the at least one main current stream (3), and with the evaluation unit (5) being connectable to the adapter or integratable therein.

15. System according to claim 11 or 12,
with the evaluation unit (5) being integrated into the switching device (1).

16. System according to one of claims 11 to 15,
with the evaluation unit (5) and/or the switching device (1) having means for producing a disconnectable mechanical connection with one another.

17. System according to one of claims 11 to 16,
with a communications module (6) being provided that is connectable to the switching device (1) and to a controller (7) for the switching device (1) via at least one communications interface (8-10) in each case, and with the evaluation unit (5) being embodied in such a way as to forward a status signal regarding the state of the protective device (2).

18. System according to claim 17,
with the evaluation unit (5) being integrated into the communications module (6).

19. System according to claim 17 or 18,
with the communications module (6) being integrated into the switching device (1).

20. System according to one of claims 17 to 19,
wherein the communications module (6) and/or the switching device (1) have means for producing a disconnectable mechanical connection with one another.

## Revendications

1. Procédé de surveillance d'un dispositif de protection (2) monté en amont d'un appareil de commutation (1) et qui est relié à l'appareil de commutation (1) par l'intermédiaire d'au moins une voie de courant principale (3), **caractérisé en ce que** l'état du dispositif de protection (2) est déterminé par une unité d'évaluation (5) au moyen d'une prise (4) sur l'au moins une voie de courant principale (3) à une interface de contact respective sur l'appareil de commutation (1) ou dans l'appareil de commutation (1).

2. Procédé selon la revendication 1, l'état du dispositif de protection (2) étant déterminé par une détection de tension sur l'au moins une voie de courant principale (3).

3. Procédé selon la revendication 1 ou 2, la prise (4) sur l'au moins une voie de courant principale (3) étant intégrée dans l'appareil de commutation (1) et reliée à une interface de contact respective sur l'appareil de commutation (1) par l'intermédiaire de respectivement une liaison électroconductrice.

4. Procédé selon la revendication 1 ou 2, la prise (4) sur l'au moins une voie de courant principale (3) étant réalisée par un adaptateur sur une pièce de commutation fixe respective de l'appareil de commutation (1) et l'unité d'évaluation (5) étant raccordée à l'adaptateur ou intégrée à l'adaptateur.

5. Procédé selon la revendication 1 ou 2, l'unité d'évaluation (5) étant intégrée dans l'appareil de commutation (1).

6. Procédé selon l'une des revendications précédentes, l'unité d'évaluation (5) étant reliée mécaniquement à l'appareil de commutation (1).

7. Procédé selon l'une des revendications précédentes, un signal d'avertissement sur l'état du dispositif de protection (2) étant retransmis de l'unité d'évaluation (5) à un module de communication (6) qui est relié à l'appareil de commutation (1) et à une commande (7) pour l'appareil de commutation (1) via respectivement au moins une interface de communication (8-10).

8. Procédé selon la revendication 7, l'unité d'évaluation (5) étant intégrée au module de communication (6).

9. Procédé selon la revendication 7 ou 8, le module de communication (6) étant intégré à l'appareil de commutation (1).

10. Procédé selon l'une des revendications 7 à 9, le module de communication (6) étant relié mécaniquement à l'appareil de commutation (1).

11. Système composé d'un appareil de commutation (1) et d'un dispositif de protection (2) monté en amont dudit appareil, lesquels peuvent être reliés par l'intermédiaire d'au moins une voie de courant principale (3), ainsi que d'une unité d'évaluation, **caractérisé en ce que** l'unité d'évaluation (5) pour déterminer l'état du dispositif de protection (2) par une prise (4) sur l'au moins une voie de courant principale (3) est prévue à une interface de contact respective sur l'appareil de commutation (1) ou dans l'appareil de commutation (1).

12. Système selon la revendication 11, l'unité d'évaluation (5) comportant des moyens pour déterminer l'état de l'organe de protection (2) par une détection de tension sur l'au moins une voie de courant principale (3).

13. Système selon la revendication 11 ou 12, la prise (4) sur l'au moins une voie de courant principale (3) pouvant être intégrée dans l'appareil de commutation (1) et pouvant être reliée à une interface de contact respective sur l'appareil de commutation (1) par l'intermédiaire de respectivement une liaison électroconductrice.

14. Système selon la revendication 11 ou 12, un adaptateur étant prévu sur une pièce de commutation fixe respective de l'appareil de commutation (1) pour la prise (4) sur l'au moins une voie de courant principale (3) et l'unité d'évaluation (5) pouvant être raccordée à l'adaptateur ou intégrée à l'adaptateur.

15. Système selon la revendication 11 ou 12, l'unité d'évaluation (5) étant intégrée dans l'appareil de commutation (1).

16. Système selon l'une des revendications 11 à 15, l'unité d'évaluation (5) et/ou l'appareil de commutation (1) comportant des moyens pour établir entre eux une liaison mécanique amovible.

17. Système selon l'une des revendications 11 à 16, un module de communication (6) étant prévu, lequel peut être relié à l'appareil de commutation (1) et à une commande (7) pour l'appareil de commutation (1) par l'intermédiaire de respectivement au moins une interface de communication (8-10) et l'unité d'évaluation (5) étant réalisée pour la retransmission d'un signal d'avertissement sur l'état du dispositif de protection (2).

18. Système selon la revendication 17, l'unité d'évaluation (5) étant intégrée au module de communication (6).

19. Système selon la revendication 17 ou 18, le module de communication (6) étant intégré à l'appareil de commutation (1).

20. Système selon l'une des revendications 17 à 19, le module de communication (6) et/ou l'appareil de commutation (1) comportant des moyens pour établir entre eux une liaison mécanique amovible.
